# EUROPEAN PATENT APPLICATION

(11) **EP 2 063 358 A2**
(43) Date of publication of application: **27.05.2009**
(21) Application number: 08169068.7
(22) Date of filing: 13.11.2008
(51) Int. Cl.: G06F 9/48

(54) **Telecommunications device security**

(30) Priority: 13.11.2007 GB 0722266
(71) Applicant: Vodafone Group PLC, Newbury Berkshire RG14 2FN (GB)
(72) Inventor: Belrose, Caroline, Marlborough, Wiltshire SN8 4AG (GB); Bone, Nicholas, Thatcham, Berkshire RG19 4RS (GB); Priestley, Mark, Newbury, Berkshire RG14 2FN (GB)
(74) Representative: Keston, David Arthur

(57) **Abstract**

A mobile terminal for use with a cellular or mobile telecommunications network includes a normal execution environment (operating system) 30 and a secure execution environment 32 comprising a Mobile Trusted Module (MTM). In this environment, a method is provided of securely providing an executable engine to a terminal, the terminal adapted for use with a cellular or mobile telecommunications network and including a secure execution environment and a removable storage device, the storage device containing address data and customised data relating to the functional engine the method including: establishing a communication between the removable storage device and the terminal, when the removable storage device is associated with the terminal; and using the address data to retrieve additional data from one or more remote locations, such that both the customised data and the additional data are required for the execution of the functional engine on the terminal.

## Description

### Field of the Invention

The present invention relates to a terminal having an execution environment in which secure functions trusted by a third party are performed. The present invention also relates to a removable attachment for use with such a terminal, and a method of providing security functions trusted by a third party in the terminal. More particularly, the terminal is for use with a cellular or mobile telecommunications network.

### Background to the Invention

A Trusted Platform Module (TPM) is a security module defined by the Trusted Computing Group (TCG) to provide protected security functions to computing platforms. The TCG is an industry organisation providing a focal point of security standardisation for computing devices.

Typically, a TPM is implemented as an additional stand-alone chip attached to a PC motherboard. However, TPMs may be implemented in hardware or software.

A TPM can be considered to include various building blocks. A building block of a trusted platform TPM component is trusted to work properly without additional supervision. Trust in these components is derived from good engineering practices, manufacturing processes and industry review.

### Example building block components may include:-

### Input/Output (I/O)

The I/O component manages information flow over a communications bus. It performs protocol encoding/decoding suitable for communication over external and internal buses. It routes messages to appropriate components. The I/O component enforces access policies associated with an Opt-In component (described below) as well as other TPM functions requiring access control.

### Non- Volatile Storage

Non-volatile storage is used to store Endorsement Key (EK), Storage Root Key (SRK), owner authorisation data and persistent flags. Platform Configuration Registers (PCR) can be implemented in either volatile or non-volatile storage. They are reset at system start or whenever the platform loses power. TCG specifies a minimum number of registers to implement (16). Registers 0-7 are reserved for TPM use. Registers 8-15 are available for operating system and application use.

### Attestation Identity Key (AIK)

Attestation Identity Keys must be persistent, but it is recommended that AIK keys be stored as Blobs (binary large objects) in persistent external storage (outside the TPM), rather than stored permanently inside TPM non-volatile storage. TCG hopes TPM implementers will provide ample room for many AIK Blobs to be concurrently loaded into TPM volatile memory, as this will speed execution.

### Program Code

Program code contains firmware for measuring platform devices. Logically, this is the Core Root of Trust for Measurement (CRTM). Ideally, the CRTM is contained in the TPM, but implementation decisions may require it be located in other firmware.

### Random Number Generator (RNG)

The TPM contains a true random-bit generator used to seed random number generation. The RNG is used for key generation, nonce creation and to strengthen pass phrase entropy.

### Sha-1 Engine

A Sha-1 message digest engine is used for computing signatures, creating key Blobs and for general-purpose use.

### RSA Key Generation

TCG standardises the RSA5 algorithm for use in TPM modules. Its recent release into the public domain combined with its long track record makes it a good candidate for TCG. The RSA key generation engine is use to create *signing keys* and *storage keys.* TCG requires a TPM to support RSA keys up to a 2048- bit modulus, and mandates that certain keys (the SRK and AIKs, for example) must have at least a 2048-bit modulus.

### RSA Engine

The RSA engine is used for signing with *signing keys,* encryption/decryption with *storage keys,* and decryption with the EK. The TCG committee anticipates TPM modules containing an RSA engine will not be subject to import/export restrictions.

### Opt-In

The Opt-In component implements TCG policy requiring TPM modules are shipped in the state the customer desires. This ranges from disabled and deactivated to fully enabled; ready for an owner to take possession. The Opt-In mechanism maintains logic and (if necessary) interfaces to determine physical presence state and ensure disabling operations are applied to other TPM components as needed.

### Execution Engine

The execution engine runs program code. It performs TPM initialisation and measurement taking.

The TCG also has a Mobile Phone Working Group, standardising a version of the TPM - Mobile Trusted Module (MTM) - to be implemented on Mobile Equipment (ME) such as a mobile or cellular telecommunications terminal. TPM, TCG and MTM are described in the documents available at this URL: https://www. trustedcomputinggroup.org/specs/mobilephone/ - which documents, such as "TCG Mobile Reference Architecture" Version 1.0 and "TCG Mobile Trusted Module Specification" Version 1.0 are fully incorporated herein by reference.

As is known, the Mobile Phone Working Group's model allows for a software application running in a Secure Execution Environment (SEE) on a mobile device to emulate the effect of a TPM chip. The MTM may also be implemented using a discrete chip, as for a TPM. The principle behind the MTM is for users or so-called "stakeholders" confidently to establish trust in a piece of hardware, software and/or network used in relation to a mobile terminal.

In mobile terminals, the MTM runs in a protected memory area, and has many useful applications installed, for which extra security is required, such as mobile payment, mobile ticketing, SIM Lock/Device Personalisation, mobile commerce and corporate network access control.

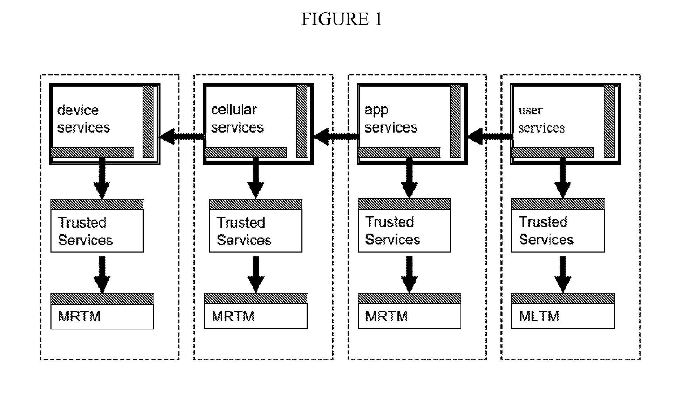

A generalised trusted mobile platform 10 is shown in Figure 1, which contains multiple engines 11, 12, 13, 14, each acting on behalf of a different stakeholder. A "stakeholder" can be considered to be an entity that is authorised to have a presence in the mobile device and which needs the ability to control and protect its individual interests in the mobile device. Stakeholders in a mobile phone include the user/owner, the network service provider, the device manufacturer and potentially other third party service providers. There may be multiple user and service provider stakeholders, but only one device manufacturer stakeholder in a platform.

An "engine" is a dedicated processor or runtime environment with access to trusted resources, which is used to run trusted services and normal services. In other words, it is a construct that can manipulate data, provide evidence that it can be trusted to report the current state of the platform and provide evidence about the current state of the platform. The purpose of an engine is to enable confidence in all the services exported and construed by the engine. All secret information in relation to an engine is stored in its MTM, which can be a "virtual" MTM.

Each engine is isolated from other engines. The strength and form of isolation may vary depending upon the purpose of the trusted mobile platform. The resources of the engines are provided by the platform and/or another engine. For instance, an engine may consist entirely of dedicated resources or may have parts of it instantiated as allocated resources.

Some engines are mandatory, and others are discretionary. A mandatory engine is authorised by the device manufacturer or the device owner, and must be present in a platform for the platform to maintain its trusted state. A discretionary engine is a trusted engine that may be present in a platform, under the authorisation of the device owner.

The engines provide services on behalf of the stakeholders, such as device services 15, cellular access services 16, application services 17 and/or user services 18. In Figure 1, the solid rectangles indicate engine interfaces and the solid arrows indicate dependency, with the arrow pointing away from the dependent entity. The device manufacturer's engine 11 is typically responsible for the integrity and configuration of a device, including the presence of mandatory engines and specified discretionary engines in the platform, coordinating communications between engines in the platform and controlling access to protected platform resources.

In the Figure 1 example, the device engine 11 provides basic platform resources, which include a user interface, debug connector, a radio transmitter and receiver, Random Number Generator, the IMEI, and a SIM interface. The device engine provides its services to a cellular engine 12, which in turn provides cellular services 16. Similarly, the cellular engine 12 provides its services to an application engine 13, and the application engine provides its services to a user engine 14.

In each engine, conventional services have access to Trusted Services 19, which make measurements of the conventional services and store those measurements in their respective Mobile Trusted Module (MTM) 20a, 20b, 20c, 20d. In this regard, each Engine may have its own MTM, or there may be one physical MTM of which each Engine has a dedicated portion, that portion being a "virtual" MTM.

The MTM, like the TPM, protects keys and other secret information while a platform is switched off and only enables keys (and other secret data) to be used by the proper entity when the MTM is securely switched on. The MTM also has commands that enable selected stakeholder applications to boot in a safe environment in the mobile device, without interfering with the rights of other stakeholders.

The device, cellular and application engines have a Mobile Remote-Owner Trusted Module (MRTM), whereas the user engine has a Mobile Local-Owner Trusted Module (MLTM). The MRTM differs from the MLTM primarily in that the MRTM is required to contain additional Protected Capabilities to support a secure boot process. The secure boot process forces the engine to boot properly, or not at all, and so provides greater confidence that certain services are correctly instantiated when they are available. The secure boot process is particularly valuable to entities whose engines are constrained by regulations. Further, remote stakeholders typically have an MRTM because those stakeholders (such as the phone manufacturer and the cellular network provider) do not have physical access to the phone and need a secure boot process to ensure that their engines do what is needed, such as to preset the operation of some parts of the phone (e.g. to preset access to the IMEI and the cellular network).

The user of the device typically has an MLTM because the user does have physical access to the phone and can load and locally authorise the software he wishes to execute. The MTMs can be trusted to report the current state of their engine and provide evidence about the current state of the engine.

MRTMs are required to support mandatory engines that provide the indispensable functionality of a trusted mobile platform. MLTMs typically support discretionary engines, which provide services that are capable of being added, removed, turned on and turned off without consent of any external service provider.

The MTM has much in common with the current TCG specification for Trusted Platform Modules (TPM) for personal computers. However, the MTM also provides functions that have been developed specifically for mobile devices - for example to take account of limitations of mobile device technologies.

The MTM extends security and interoperates with existing mobile device components such as SIM, USIM, and UICC cards. In addition, MTM may support security for OMA, 3GPP, MINI, OMTP, and others. MTMs are intended to allow multiple trusted devices and components to work together and share the same security infrastructures.

Currently Engines are specific to a particular ME/computing device. However, it would be desirable for a user to be able to transfer one or more Engines from one device to another. For instance, when a user upgrades their mobile phone, it would be useful for the user to be able to simply and easily port one or more Engines and their associated MTMs to the new phone.

Porting an Engine would require moving all the Engine's settings and custom data, and, as these are protected by the MTM, the Engine's MTM as well. These issues need to be resolved within the confines of the TCG Specifications. The current mobile Reference Architecture does not envisage this problem, as it is assumed that the relevant MTMs are bound to the Device. Even when an MTM is implemented as a virtual "view" onto an underlying Device Manufacturer's MTM, this underlying MTM is not removable from the Device.

Portability of an Engine is therefore an issue that needs to be resolved in terms of being able to securely implement the Engine on a second device, and also remove it securely from the first device.

A mobile terminal's SIM card could be used to transfer one or more Engines, but SIM cards typically do not have enough memory to do so. Further, SIM cards cannot support an entire Engine because it does not have critical components to make an Engine useful, such as a User Interface, keyboard, screen, radio connection and the like.

### Summary of the Invention

In accordance with one aspect of the present invention, there is provided a method for implementing a distributed engine in a terminal, the terminal executing an environment capable of hosting said distributed engine, the method including: provisioning the terminal with a first component of the distributed engine; receiving a removable storage device, the storage device containing customised data relating to the distributed engine and a second component of the distributed engine; establishing a communication between the removable storage device and the terminal, when the removable storage device is associated with the terminal; and using the communication to retrieve the customised data, wherein both the first and second components are required for the execution of the distributed engine.

As a result, the distributed engine can be moved around from one terminal to another. The first component of the engine is provisioned to a second terminal: the first component may be sent by a known technique, for example: over a 2G/3G network, via WiFi network, Bluetooth [RTM] connection or indeed via a wired coupling from one terminal to another. Then the removable storage device (e.g. a SIM card) containing the second component may be moved over to the second terminal as well to complete the engine move.

In the above method the second component contained by the removable storage device preferably includes a Mobile Trusted Module (MTM) or a Trusted Platform Module (TPM). The customised data may then be stored in the MTM/TPM.

Advantageously, the customised data includes encrypted data. The method may then, further include: using the customised data to decrypt the encrypted data to generate decrypted code and executing the decrypted code on the hosting environment in order to implement the distributed engine. Furthermore, the step of decrypting the encrypted data to generate decrypted code may be performed by the second component.

The method above may further comprise, once execution of the distributed engine has been completed, transmitting additional data to a remote address for retrieval next time the distributed engine is to be operated. In such a case, the additional data advantageously comprises at least one of element selected from amongst:
encrypted data relating to the distributed engine; encrypted key blobs; and/or backup copies of one or more encryption keys.

Conveniently, the terminal may be a mobile terminal adapted for use in a cellular or mobile telecommunications network.

Furthermore changes are preferably backed up to the network after execution of the engine (so that when inserted in a second terminal and coupled to the network these backed up changes - from use with the terminal - can be obtained on the second terminal).

In accordance with a further aspect of the present invention, there is provided a removable storage device configured for use with a terminal capable of hosting a distributed engine, the terminal being provisioned with a first component of the distributed engine, and the removable storage device including customised data relating to the distributed engine and a second component of the distributed engine, wherein the customised data is required by the terminal in order to execute the distributed engine and is arranged to be retrievable by the terminal when the removable storage device is in communicable relation with the terminal.

In this context, the second component contained by the removable storage device preferably includes a Mobile Trusted Module (MTM) or a Trusted Platform Module (TPM). The customised data may then be stored in the MTM/TPM.

The storage device may further contain address data relating to the distributed engine; and wherein the address data is used to retrieve remotely engine data required for the execution of the distributed engine, the address data being retrievable by the terminal when the removable storage device is in communicable relation with the terminal. The address data may conveniently comprise one or more URL addresses.

The terminal associated with the removable storage device above, may be configured for use with a cellular or mobile telecommunications network, the removable storage device conveniently being a SIM card.

In this way, by provisioning the device with a removable storage device, such as a SIM, it becomes possible to control use of the Engine, such that it can only be activated when the removable storage device is present.

In accordance with another aspect of the present invention, there is provided a system for implementing a distributed engine, the system including: a user terminal, which, in operation, executes an environment capable of hosting a distributed engine and is provisioned with a first component of the distributed engine; a removable storage device, the storage device containing customised data relating to the distributed engine and a second component of the distributed engine; and means for establishing a communication between the removable storage device and the terminal, wherein the customised data is required in order to execute the distributed engine, and is retrievable by the terminal when the removable storage device is in communicable relation with the terminal.

The removable storage means may be a SIM card. Preferably the customised data is address data for one or more remote locations from which further data for the engine is retrievable. By provisioning the SIM with the address of a remote link at which code to operate an engine can be downloaded, it becomes possible for the SIM to port engines between terminal devices, without the need for the SIM to carry large amounts of code, thereby keeping the size of the SIM to a minimum.

In the context of the above system, the second component contained by the removable storage device preferably includes a Mobile Trusted Module (MTM) or a Trusted Platform Module (TPM). The customised data may then be stored in the MTM/TPM.

Importantly, where the removable storage device includes an MTM/TPM, all of these aspects of the invention can be implemented whilst still maintaining the integrity of the MTM/TPM.

### Brief Description of the Drawings

For a better understanding of the present invention, embodiments will now be described, by way of example only, with reference to the accompanying drawings, in which:-
Figure 1 shows a generalised trusted platform for use on a mobile terminal, useful in explaining the operation of the background to the present invention;
Figure 2 shows schematically the elements of a telecommunications network including mobile telecommunication terminals;
Figure 3 shows schematically some elements present in one of the telecommunications terminals of Figure 2; and
Figure 4 shows a mobile terminal according to an embodiment of the invention.

### Detailed Description of Embodiments of the Invention

The elements of a conventional mobile or cellular telecommunications network will first be briefly described with reference to Figure 1.

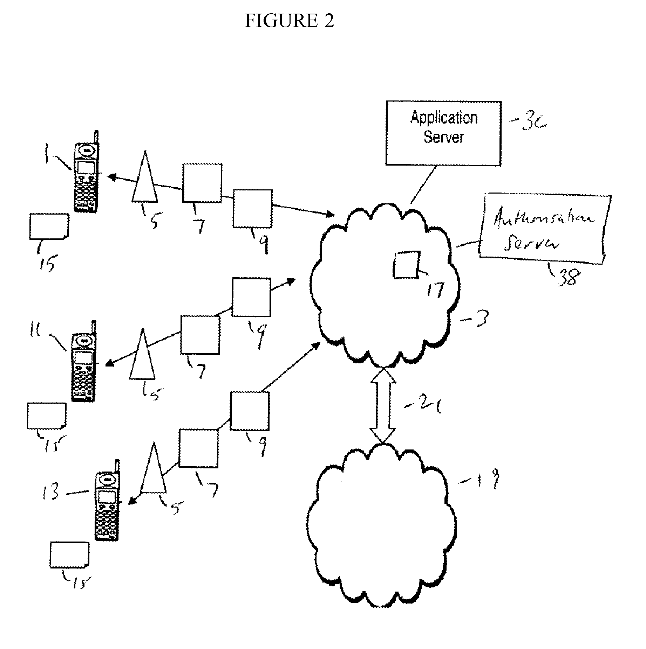

Figure 2 shows schematically a network in which the invention may be used. The figure shows a cellular network. However, it should be appreciated that the invention is applicable to any type of network, although it is particularly applicable to a network where at least some of the devices communicate using mobile telecommunications/wireless data transmission.

A first telecommunications terminal 1 is registered with a GSM/GPRS or UMTS (3G) mobile telecommunications network 3. The telecommunications terminal 1 may be a handheld mobile telephone, a personal digital assistant (PDA) or a laptop computer equipped with a datacard. The telecommunications terminal 1 communicates wirelessly with mobile telecommunications network 3 via the radio access network (RAN) of the mobile telecommunications network 3, comprising, in the case of a UMTS network, a base station (Node B) 5, and a radio network controller (RNC) 7. Communications between the telecommunications terminal 1 and the mobile telecommunications network 3 are routed from the radio access network via GPRS support nodes (SGSN) 9, which may be connected by a fixed (cable) link to the mobile telecommunications network 3.

In a conventional manner, a multiplicity of other telecommunications terminals are registered with the mobile telecommunications network 3. These telecommunications terminals include second and third telecommunications terminals 11, 13. The second and third telecommunications terminals 11, 13 communicate with the mobile telecommunications network 3 in a similar manner to the telecommunications terminal 1, that is via an appropriate Node B 5, RNC 7 and SGSN 9.

The mobile telecommunications network 3 includes a gateway GPRS support node (GGSN) 17 that enables IP-based communications with other networks, such as the Internet or other IP network 19 via an appropriate link 21.

Each of the telecommunications terminals 1, 11 and 13 is provided with a respective subscriber identity module (SIM) 15. During the manufacturing process of each SIM, authentication information is stored on the SIM under the control of the mobile telecommunications network 3. The mobile telecommunications network 3 itself stores details of each of the SIMs issued under its control. In operation of the mobile telecommunications network 3, each of the telecommunications terminals 1, 11, 13 is authenticated (for example, when the user activates the telecommunications terminal in the network with a view to making or receiving calls) by the network sending a challenge to the telecommunications terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the telecommunications terminal 1, 11, 13.

Using pre-stored information identifying the relevant SIM 15, the authentication processor calculates the expected value of the reply from the telecommunications terminal 1, 11, 13. If the reply received matches the expected calculated reply, the SIM 15 and the associated telecommunications terminal are authenticated.

It should be understood that such an authentication process may be performed for any telecommunications terminal provided with a SIM 15 under control of the mobile telecommunications network 3. In the embodiment each telecommunications terminal 1,11,13 communicates wirelessly with the mobile telecommunications network 3 via the network's radio access network, although this is not essential. For example, the telecommunications terminal may communicate with the network via the fixed telephone network (PSTN), via a UMA "access point" and/or via the Internet.

The SIM 15 used by each telecommunications terminal 1,11,13 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

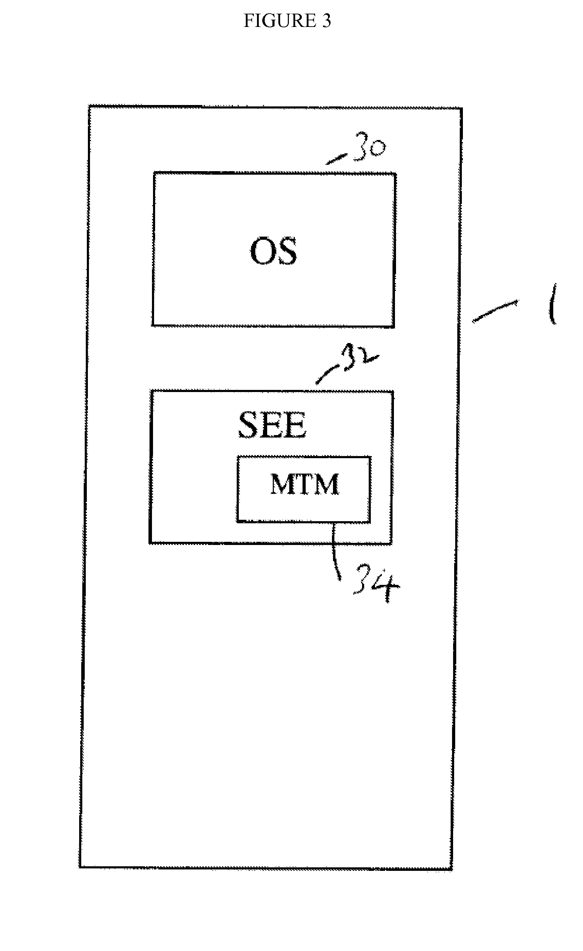

As shown in Figure 3, the mobile terminal 1 includes a main operating system (OS) 30, similar to that found on a conventional mobile terminal. The operating system 30 can be considered to be a "normal execution environment". The mobile terminal 1 further includes a secure execution environment (SEE) 32 in which a Device Manufacturer's mobile trusted module (MTM) 34 is implemented, where the MTM is implemented in software. In the SEE 32 very secure applications can be stored and typically comprise less than 10K of data. Alternatively, of course, the MTM can be implemented in hardware, in a chip, which is associated with the SIM.

The MTM 34 may include the elements and operate in the manner described in the TPM, TCG and MTM Standards described above.

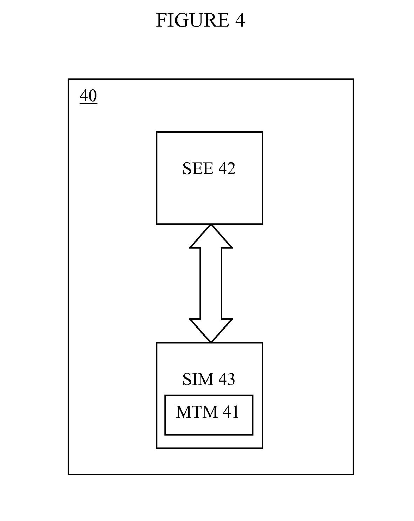

With reference to Figure 4, according to a first embodiment of the invention, the MTM functionality 41 for each Engine is stored on the SIM 43 of a mobile device 40, along with other data required to operate the Engine, such as personalisation settings. These data could, for instance in the case of a User Engine, contain the user's contact book, calendar and other personal data. In the case of a Service Provider's Engine, they could contain URLs and preferences that are used when accessing the service remotely, or locally cached service data.

In this embodiment of the invention, mobile device 40 may have one or more preinstalled Engines, such as a Device Manufacturer's Engine, but it is a device in which the user has yet to insert their SIM card (i.e. a new mobile terminal, or a terminal belonging to a third party). Therefore, when the user first inserts their SIM 43 into the mobile terminal 40, the SIM 43 will authenticate the terminal. This is preferably achieved by establishing a secure channel to a trusted area, such as SEE 42, and performing appropriate checks to determine whether the Terminal supports a secure enough isolation environment to run each portable Engine for which the SIM 43 has the appropriate data to run. For instance, the terminal may be deemed to be authenticated if it contains a suitable Device Manufacturer's MTM, although a different decision may be made for each Engine in relation to which the SIM 43 carries data. In this regard it is to be appreciated that the device manufacturer is likely to not require the MTM for its own engine to be included on a user's SIM, as its Engine is likely to be specific to terminal 40, and therefore not able to be ported between terminals.

After authentication of the terminal, a decision can then be made on the quality of normal execution environment supported by the terminal. For example, a high quality execution environment may allow the terminal to run four isolated engines as shown in Figure 1, while still allowing some engines to provide services to other engines. This quality decision may be achieved by determining whether the terminal is configured to run a "hypervisor" on top of which several instances of the main OS can execute in parallel as independent engines. The terminal might alternatively run a single main OS that is able to support multiple security domains and to isolate them via access control policies and memory management.

To authenticate the terminal, the aforementioned secure channel will typically be set up by first establishing a Security Association Master Secret between the SIM and the trusted area, using, for example, the mechanisms described in 3GPP TS 33.110. During this first set up, the mobile network will be able to authenticate the terminal, such as by authenticating the Device Manufacturer's MTM, using a private key stored in the MTM and associated certificate. The network can also obtain a full report from the MTM on the terminal's boot state and capabilities. Once the network has successfully authenticated the MTM, it will arrange for the Master Secret to be securely supplied to both the terminal and the SIM card, and for the Master Secret to be "sealed" on the terminal to an appropriate security state, ensuring that the Master Secret is only available to the terminal when the terminal has again reached the applicable boot state and capabilities. After this, the SIM will be able to thereafter efficiently authenticate the MTM whenever needed using the Master Secret, and establishing session-specific secrets as described in ETSI TS 102 484.

If the device does support a suitable environment for at least one of the Engines for which the SIM 43 has data, then the SIM will provide the Terminal with a link, such as a URL link, to a remote location from which the Terminal can download code in relation to that Engine or those Engines. A single link may be used in relation to multiple engines to be downloaded, or a single link for each Engine to be downloaded, or any combination thereof.

Once the terminal 40 has downloaded the code for a specific Engine, it can then be run on the Terminal's execution environment, typically in a domain within the Terminal's main operating system (OS) or a domain on top of a hypervisor. The downloaded code can be run in conjunction with the MTM 41 and other user-specific or custom data that may be stored on the SIM 43, in order to implement the Engine. In this regard, preferably custom encrypted data and/or code for use by the Engine is provided by the SIM 43.

In an alternative embodiment, custom encrypted data and/or code for an Engine may be obtained from a further URL link provided by the SIM 43. Then, when terminal 40 receives the encrypted data/code, the MTM 41 is used to decrypt the downloaded data and/or code.

Once the Engine is running on the Terminal 40, it can use the already established secure channel to communicate with its relevant MTM on the SIM 43, or the Engine can establish its own additional secure channel to its MTM. In this regard it is to be appreciated that the MTM 41 is preferably made up of multiple virtual MTMs for each Engine, so that each Engine has its own discrete portion of the MTM 41 in which to secure its own data.

In this way, by including just enough code/data on the SIM to:
a) undertake the necessary Terminal authentication to ensure the terminal can support a given Engine; and
b) inform the Terminal where to obtain generic code/data and/or encrypted code/data,
it is possible to achieve portability of a secure Engine from one device to another, without unduly taking up memory space on the SIM.

A particular advantage of these embodiments of the invention is that when the SIM is removed from the Terminal, an Engine having its MTM on the SIM is not able to run, and no secret information is stored on the Terminal that can be read. In this regard, even if encrypted code/data is downloaded onto the Terminal, the removed SIM holds the decryption keys, and so the code/data on the terminal is unusable and unreadable by third parties. The SIM therefore is effectively a control point for the use and operation of Engines on a Terminal.

A further advantage of the alternate embodiment of the invention is that by providing the SIM only with address information from which Engine code and/or data can be downloaded, the size of the SIM card can also be kept small, therefore minimising costs which inevitably increase with increased memory size.

It is to be appreciated that where encrypted data for an Engine is downloaded to the Terminal 40, it is preferably safely backed up to a remote server, in case the user next requests the Engine to be downloaded onto a different mobile terminal. This is in order to ensure that the terminal always has available the encrypted data and associated key blobs, which can then be decrypted using the keys held in the MTM 41 on the SIM.

It is also to be appreciated that where the SIM is reinserted into a terminal in which an Engine for which it holds data has already been downloaded onto the Terminal, then the SIM will still perform its initial checks to determine whether or not the Terminal still supports a suitable environment for that Engine. If the terminal is found to be still suitable, and the pre-installation of the Engine is noted, then the Engine can be run on the terminal without necessarily downloading any code from a remote link, and just using the virtual MTM from the SIM. Having said that, it may still be necessary to retrieve further encrypted data or key blobs from a remote server, where they have been backed up, in case the data and keys were changed while the Engine was in use by alternative terminals.

The embodiments of the invention have been described in relation to a mobile device, such as a mobile phone, portable computer or PDA. It is, however, to be appreciated that the embodiments of the invention may also be applied to other devices with computing capabilities such as a personal computer, a wireless network access point or set top box (for decoding broadcast terrestrial and satellite signals). In this regard, although the embodiments have been described in relation to a SIM card, the embodiments may equally be applicable to any other removable memory device.

The embodiments of the invention have particular utility for users upgrading their devices, for users who have multiple mobile devices, such as a work device and a personal device, and also for users who share their mobile terminals. A further use for these embodiments of the invention is in relation to users migrating data and services between a mobile terminal and a PC and/or a set-box or the like.

## Claims

1. A method for implementing a distributed engine in a terminal, the terminal executing an environment capable of hosting said distributed engine, the method including:
provisioning the terminal with a first component of the distributed engine;
receiving a removable storage device, the storage device containing customised data relating to the distributed engine and a second component of the distributed engine;
establishing a communication between the removable storage device and the terminal, when the removable storage device is associated with the terminal; and
using the communication to retrieve the customised data,
wherein both the first and second components are required for the execution of the distributed engine.

2. The method of claim 1, further comprising: executing a secure execution environment for communication with the second component and establishing a secure connection between the second component and the secure execution environment.

3. The method of claim 1 or 2, wherein the customised data comprises code necessary for executing the distributed engine.

4. The method of claim 3, further including executing the code on the hosting environment in order to implement the distributed engine.

5. The method of any one of claims 1 to 4, wherein the customised data includes encrypted data.

6. The method of claim 5, further including using the customised data to decrypt the encrypted data to generate decrypted code and executing the decrypted code on the hosting environment in order to implement the distributed engine.

7. The method of claim 1 or 2, wherein the customised data includes address data for one or more remote locations from which further data for the engine is retrievable.

8. The method of any one of the preceding claims, wherein the step of establishing a communication precedes the provisioning step, the storage device further containing address data relating to the distributed engine; and
wherein the step of provisioning the terminal with a first component includes: using the communication to retrieve the address data, the address data being used to retrieve remotely engine data required for the execution of the distributed engine.

9. A removable storage device configured for use with a terminal capable of hosting a distributed engine, the terminal being provisioned with a first component of the distributed engine, and the removable storage device including customised data relating to the distributed engine and a second component of the distributed engine, wherein the customised data is required by the terminal in order to execute the distributed engine and is arranged to be retrievable by the terminal when the removable storage device is in communicable relation with the terminal.

10. The removable storage device of claim 9, wherein the storage device further contains address data relating to the distributed engine; and wherein the address data is used to retrieve remotely engine data required for the execution of the distributed engine, the address data being retrievable by the terminal when the removable storage device is in communicable relation with the terminal.

11. The removable storage device of claim 9 or 10 wherein the data on the removable storage device is required for executing the distributed engine, such that any data retrieved by the terminal is redundant when the removable storage device is no longer in communicable relation with the terminal.

12. A system implementing a distributed engine, the system including:
a user terminal, which, in operation, executes an environment capable of hosting a distributed engine and is provisioned with a first component of the distributed engine;
a removable storage device, the storage device containing customised data relating to the distributed engine and a second component of the distributed engine; and
means for establishing a communication between the removable storage device and the terminal,
wherein the customised data is required in order to execute the distributed engine, and is retrievable by the terminal when the removable storage device is in communicable relation with the terminal.

13. The system of claim 12 wherein the customised data includes address data that is required by the terminal in order to retrieve further engine data required to execute the distributed engine, and the address data is retrievable by the terminal when the removable storage device is in communicable relation with the terminal.

14. A user terminal incorporating the system as claimed in claim 12 or 13.

15. A method as claimed in any one of claims 1 to 8, wherein the distributed engine is portable between the terminal and a second terminal, the second terminal being provisioned with a third component corresponding to the first component of the distributed engine.
